# FASCICULE DE BREVET EUROPEEN

(11) **EP 4 178 767 B1**
(45) Date de publication et mention de la délivrance du brevet: **28.08.2024**
(21) Numéro de dépôt: 21739715.7
(22) Date de dépôt: 09.07.2021
(51) Int. Cl.: B25J 9/00

(54) **PLATEFORME MOBILE PORTANT UN ENSEMBLE MOTEUR EMBARQUE ET ROBOT PARALLELE À CABLES COMPRENANT UNE TELLE PLATEFORME MOBILE**
MOBILE PLATTFORM MIT EINER BORDMOTORANORDNUNG UND PARALLELROBOTER MIT KABELN MIT SOLCH EINER MOBILEN PLATTFORM
MOBILE PLATFORM CARRYING AN ON-BOARD MOTOR ASSEMBLY AND A PARALLEL ROBOT WITH CABLES COMPRISING SUCH A MOBILE PLATFORM

(30) Priorité: 10.07.2020 FR 2007369
(43) Date de publication de la demande: 17.05.2023
(73) Titulaire: Institut de Recherche Technologique Jules Verne, 44340 Bouguenais (FR)
(72) Inventeur: PEDEMONTE, Nicolo, 85610 Cugand (FR); VAVRA, Viktor, 44800 Saint-Herblain (FR)
(74) Mandataire: Alatis
(86) Numéro de dépôt international: PCT/EP2021/069088
(87) Numéro de publication internationale: WO 2022/008698

(56) Documents cités:
- WO-A1-2011/012916
- WO-A1-2016/132284
- FR-A1- 2 910 833
- US-A1- 2013 345 876

## Description

### DOMAINE TECHNIQUE DE L'INVENTION

L'invention concerne, de façon générale, le domaine technique des robots parallèles à câbles.

L'invention se rapporte plus spécifiquement à une plateforme mobile pour un robot parallèle à câble et un robot parallèle à câble comportant une telle plateforme mobile.

### ÉTAT DE LA TECHNIQUE ANTÉRIEURE

Un « robot parallèle à câbles » ou « robot à câbles » est un robot à cinématique parallèle, dans lequel une plateforme est positionnée et déplacée dans un espace déterminé au moyen de câbles agissant sur ladite plateforme. Chaque câble s'étend entre un point d'ancrage sur cette plateforme et par exemple un treuil fixé à une structure fixe, le treuil constituant un ancrage. La capacité de variation importante de la longueur de câble entre le point d'ancrage de la plateforme et l'ancrage à la structure fixe permet d'obtenir un volume de travail de la plateforme mobile particulièrement important avec une structure légère et facilement mise en place en installant les ancrages par exemple au plafond d'un atelier ou sur des poutres en hauteur.

La stabilité d'une telle plateforme dans une position donnée est assurée généralement par son équilibre statique, lequel équilibre est assuré par la tension des câbles qui agissent de manière à s'opposer aux forces extérieures auxquelles la plateforme est soumise. Ainsi, pour assurer la stabilité de n'importe quelle position et orientation de la plateforme dans l'espace, il est connu qu'un minimum de sept câbles est nécessaire. Le robot parallèle à câbles fonctionne avec plusieurs chaînes cinématiques ou boucles fermées.

En général, le nombre de câbles supportant la plateforme est égal à huit : cela permet de conférer six degrés de liberté au robot, et ainsi d'avoir une précision satisfaisante dans le contrôle du robot dans sa tâche. En effet, lorsque le robot parallèle à câbles comporte huit câbles, cela permet de contrôler les trois degrés de liberté en translation et les trois degrés de liberté en rotation de la plateforme mobile dans un grand espace.

Il est également connu d'utiliser un nombre de câbles pouvant être inférieur à huit, étant par exemple égal à sept. Il est à noter que pour des questions de symétrie de l'architecture du robot, la présence de huit câbles est préférée. Par ailleurs, cela permet d'avoir un plus grand espace de travail bien que le risque de collisions entre câbles augmente avec le nombre de câbles. Toutefois, dans certains cas il est parfois souhaité utiliser un nombre de câbles supérieur à huit, par exemple supérieur ou égal à neuf, dix ou encore douze câbles, voire quinze ou vingt câbles. Lorsque le nombre de câbles est supérieur à huit, on peut avoir une redondance des câbles qui permet d'augmenter la possibilité de rotation de la plateforme.

Toutefois, la recherche de la rapidité d'exécution des robots parallèles à câbles et la stabilité conduit à des structures de plateformes mobiles généralement complexes et volumineuses, impactant notamment la masse de la plateforme mobile à déplacer. Il existe donc un besoin d'une solution qui soit compacte, facilement transportable, et apte à être installé rapidement sur tous sites industriels tout en conservant des caractéristiques dynamiques optimales, voire améliorées. Les documents US2013/345876 A1, WO2016/132284 A1, WO2011/012916 A1, montrent d'autres exemples de robots mobiles soutenus par des câbles.

### EXPOSE DE L'INVENTION

L'invention vise à remédier à tout ou partie des inconvénients de l'état de la technique en proposant notamment une solution d'un robot parallèle câbles simple, léger, relativement compact et facile à déployer tout en étant fiable et présentant une stabilité satisfaisante.

Pour ce faire est proposé, selon un premier aspect de l'invention, une plateforme mobile destinée à être suspendue par des câbles de suspension ayant une extrémité d'ancrage fixée à une structure fixe dans l'espace, la plateforme mobile comprenant :
- un ensemble moteur comportant des tambours d'enroulement motorisés, chacun destiné à être solidarisé à un câble associé parmi les câbles de suspension pour réaliser un enroulement ou un déroulement du câble associé,
- une structure de support pour supporter l'ensemble moteur,
la plateforme mobile étant remarquable en ce qu'elle comprend une plateforme de suspension rigidement solidaire de la structure de support et disposée, suivant un axe de référence de la plateforme mobile, à distance des tambours d'enroulement de l'ensemble moteur, la plateforme de suspension comprenant des organes de renvoi, chacun à distance d'un tambour associé parmi les tambours d'enroulement et configuré pour dévier le câble associé au tambour associé, entre le tambour associé et l'extrémité d'ancrage du câble associé, dans une position suspendue de la plateforme mobile, dans laquelle l'axe de référence est vertical et la plateforme de suspension est située au-dessus des tambours d'enroulement.

Grâce à une telle combinaison de caractéristiques, l'ensemble moteur est embarqué directement sur plateforme mobile, notamment solidaire de la structure de support. Par ailleurs, une telle plateforme de suspension permet un déport vertical de la suspension de la plateforme mobile à distance et au-dessus l'ensemble moteur tandis que le centre de gravité est situé principalement au niveau de l'ensemble moteur, voire en dessous de cet ensemble moteur en fonction de la masse d'un outil de travail prédéterminé qui est porté de préférence par la structure de support. On obtient une plateforme mobile rigide présentant une structure simplifiée qui, malgré l'embarquement de l'ensemble moteur, permet d'en réduire le nombre du fait que sa configuration confère une stabilité améliorée tout en réduisant le nombre de câbles utiles.

Le déport en hauteur des renvois d'angle permet également que, dans la position suspendue, une portion de chaque câble est tendue entre le tambour associé et l'organe de renvoi associé de la plateforme de suspension, chacune de ces portions tendues de câble étant dirigée verticalement vers la plateforme de suspension plus en hauteur, évitant ainsi tout effet de cisaillement des câbles contre un éventuel élément de la plateforme mobile au voisinage du tambour.

Selon un mode de réalisation, chacun des organes de renvoi constitue une unique déviation du câble associé au tambour associé, entre le tambour associé et l'extrémité d'ancrage du câble associé, dans une position suspendue de la plateforme mobile. Dans une telle configuration, Chaque câble s'étend sensiblement verticalement suivant l'axe de référence, entre le tambour associé et l'organe de renvoi associé, et sensiblement oblique dans le sens d'un éloignement de la plateforme et verticalement vers le haut par rapport à la plateforme mobile, entre l'organe de renvoi associé et l'extrémité d'ancrage du câble associé, dans une position suspendue de la plateforme mobile. On obtient une configuration simple et minimisant les frottements, plus réactive et tout aussi stable.

Selon un mode de réalisation, la plateforme de suspension est fixée à la structure de support par un mât de suspension s'étendant suivant l'axe vertical de référence. Un tel mât offre une configuration simple, efficace et peu volumineuse pour assurer la rigidité structurelle entre la plateforme de suspension et la structure de support. Le mât peut être tubulaire pour gagner en rigidité sans alourdir inutilement la plateforme mobile.

Le mât peut également présenter une hauteur, ou longueur suivant l'axe verticale, variable : dans ce cas au moins deux éléments, par exemples des tubes peuvent coulisser l'un dans l'autre et être maintenus dans une position donnée par des moyens de verrouillage de la position axiale. Ces moyens de verrouillage peuvent comporter une vis de réglage d'un effort résistant s'opposant au mouvement relatif de translation entre les tubes extérieur et intérieur, la vis de réglage de l'effort résistant comprenant au moins un patin de friction, supporté par le premier des deux éléments, et une surface de serrage solidaire du deuxième deux éléments et contre laquelle le patin de friction est en contact et en appui, le patin de friction étant mobile par rapport à la surface de serrage de sorte à faire varier l'effort de pression du patin de friction contre la surface de serrage, entre une position d'utilisation, dans laquelle une pression d'utilisation prédéterminée du patin de friction est appliquée contre la surface de serrage, et une position de réglage, dans laquelle une pression de réglage inférieure à la pression d'utilisation est appliquée par le patin de friction contre la surface de serrage. On peut prévoir une certaine symétrie des moyens de verrouillage par rapport à l'axe de référence, ou l'utilisation d'une masse de correction pour équilibrer la plateforme mobile.

Selon un mode de réalisation, la structure de support, de préférence avec l'ensemble moteur, a un premier centre de gravité, la plateforme de suspension a un deuxième centre de gravité, l'axe de référence passant par les premier et deuxième centres de gravité. Une telle caractéristique améliore la stabilité de la plateforme mobile et lui garantit un comportement dynamique amélioré.

Selon un mode de réalisation, chacun des tambours d'enroulement est guidé en rotation autour d'un axe d'enroulement, les axes d'enroulement des tambours étant situés dans un même un plan de référence, de préférence perpendiculaire à l'axe de référence.

Selon un mode de réalisation, chacun des organes de renvoi est apte à dévier le câble associé autour d'un centre de courbure, les centres de courbure des organes de renvoi étant coplanaires dans un plan de suspension parallèle au plan de référence. De préférence également, chacune des surfaces de contact des organes de renvois, configurées pour guider la déviation du câble associé, présentent une courbure identique.

Selon un mode de réalisation, chacun des tambours présente des flasques délimitant de part et d'autre axialement suivant l'axe d'enroulement une portion d'enroulement d'une longueur axiale prédéterminée, l'organe de renvoi associé étant situé à une distance supérieure d'au moins 12 fois, de préférence au moins 15 fois, de préférence encore au moins 20 fois, la longueur axiale prédéterminée.

Selon un mode de réalisation, la plateforme mobile comporte des câbles de suspension, chacun des tambours d'enroulement étant solidarisé à un câble associé parmi les câbles de suspension. Dans une telle configuration, une telle plateforme mobile est donc très simple à déployer et à transporter tout en étant simple d'utilisation. Une fois arriver sur une zone de travail, il suffit simplement d'arrimer chacune des extrémités d'ancrage des câbles de suspension à la structure fixe.

De préférence, un câble d'alimentation en énergie est associé à l'un des câbles de suspension de sorte que le déploiement du câble de suspension permet de déployer le câble d'alimentation, facilitant son utilisation tout en évitant l'utilisation d'un moyen de stockage d'énergie tel qu'une batterie. On pourra prévoir deux câbles d'alimentation, pour pallier un éventuel dysfonctionnement de l'un des câbles d'alimentation. Le câble d'alimentation peut par exemple être branché sur un réseau d'énergie, tel un réseau d'électricité alimentant la zone de travail.

Selon un mode de réalisation, la plateforme mobile est configurée de sorte que dans la position suspendue, une portion de chaque câble est tendue entre le tambour associé et l'organe de renvoi associé de la plateforme de suspension, avec un angle d'enroulement variable inférieur à 2°, l'angle d'enroulement étant mesuré dans un plan de projection orthogonale parallèle à l'axe de référence et à l'axe d'enroulement du tambour associé, entre une projection orthogonale de l'axe de référence et une projection orthogonale de la portion de câble.

Selon un mode de réalisation, le nombre de câbles est supérieur ou égal à trois, de préférence inférieur à sept, de préférence encore inférieur à cinq, de préférence encore égal à quatre. Un nombre de quatre câbles de suspension constitue un bon compromis entre la stabilité et le guidage de la plateforme mobile tout en réduisant de manière substantielle la masse et le volume d'une plateforme traditionnelle qui comporte typiquement huit câbles.

Selon un mode de réalisation, les organes de renvoi de la plateforme de suspension sont répartis circonférentiellement de façon régulière autour de l'axe de référence afin de garantir l'équilibre et la stabilité de la plateforme lorsqu'elle est suspendue. De préférence, chacun des organes de renvoi est équidistant des deux autres organes de renvoi adjacents entre lesquels il est situé, le long de la circonférence.

Selon un mode de réalisation, les organes de renvoi de la plateforme de suspension sont équidistants de l'axe de référence, de préférence à une distance supérieure à 10 fois, de préférence supérieure à 20 fois et inférieure à 100 fois, de préférence inférieure à 50 fois, un diamètre des câbles. On choisira de préférence des câbles de diamètre identique.

Selon un mode de réalisation, les organes de renvoi de la plateforme de suspension sont répartis sur une surface inférieure ou égale à 300 centimètres carrés, de préférence inférieure ou égale à 200 centimètres carrés, de préférence encore inférieure ou égale à 100 centimètres carrés. D'un point de vue du modèle géométrique du robot, cela correspond à une plateforme de suspension quasi-ponctuelle par rapport à la dimension d'un espace dans lequel évolue généralement une telle plateforme mobile suspendue, les extrémités d'ancrage fixées à la structure fixe dans l'espace pouvant se trouver à plusieurs dizaines de mètres de distance. Cette plateforme quasi-ponctuelle permet, dans une position suspendue, de se comporter comme une cloche, et d'avoir donc une orientation presque constante dans tout son espace de travail. On notera que, cette plateforme n'est pas parfaitement ponctuelle, ceci éviter que des rotations indésirables puissent se produire spontanément autour de l'axe vertical de référence. Pour cette raison, les organes de renvoi de la plateforme de suspension sont répartis sur une surface supérieure ou égale à 8 centimètres carrés, de préférence supérieure ou égale à 10 centimètres carrés. Une plateforme d'une surface comprise sensiblement entre 100 et 200 centimètres carrés apparaît comme un bon compromis. Cette surface s'entend comme une surface d'encombrement par les organes de renvois, et pas comme une surface de la plateforme de suspension qui peut être alvéolaire pour gagner en masse. Cette surface d'encombrement est de préférence délimitée par un polygone, de préférence régulier, d'un ordre prédéterminé égale au nombre de câbles, et donc au nombre d'organe de renvoi, les organes de renvois étant placés à chaque sommet de la surface polygonale.

Selon un mode de réalisation, les organes de renvoi de la plateforme de suspension comprennent des poulies ou des oeillets de renvoi. De telles configurations sont simples et légères tout en assurant de façon optimale la fonction de renvoi des câbles.

Selon un mode de réalisation, l'ensemble moteur comporte, associé à chacun des tambours d'enroulement motorisés, un motoréducteur. En d'autres termes, chacun des moteurs entraînants en rotation un tambour associé, comportant un réducteur pour modifier le rapport de vitesse et/ou le couple, ceci pour entraîner en rotation le tambour d'enroulement associé avec un moindre effort.

Selon un mode de réalisation, l'ensemble moteur comporte, associé à chacun des tambours d'enroulement motorisés, un doigt de guidage pour guider une portion du câble associé destinée à passer entre le doigt de guidage et le tambour associé. Un tel doigt de guidage permet de faciliter l'enroulement du câble associé autour du tambour.

Selon un mode de réalisation, les tambours présentent une surface d'enroulement lisse, c'est-à-dire sans gorge de guidage. En plus du fait pour les tambours d'être positionnés à une certaine distance de la plateforme de suspension, cela permet aux câbles de s'enrouler naturellement sur toute la longueur du tambour. Un système à ressort permet de bien positionner le câble associé sur le tambour en limitant la formation de surépaisseurs locales dues au mauvais enroulement et obtenir ainsi un enroulement homogène.

Selon un mode de réalisation, chaque tambour est configuré pour assurer un enroulement du câble associé sur plusieurs épaisseurs pour permettre au robot de se déplacer sur de grandes distances sans devoir augmenter considérablement la taille des tambours.

Selon un autre aspect de l'invention, celle-ci a trait à un robot parallèle à câbles, remarquable en ce qu'il comporte une plateforme mobile telle que décrite ci-avant et un ensemble de commande pour commander l'ensemble moteur de la plateforme mobile et contrôler le déplacement de la plateforme mobile.

Selon un mode de réalisation, un système de drisse équipe la structure fixe configuré pour hisser les extrémités d'ancrage des câbles de suspension, ceci sans devoir monter en hauteur à chaque déploiement de la plateforme mobile. Cela réduit drastiquement le temps d'installation de la plateforme mobile. Seule l'installation du système de drisse, qui ne doit être effectué qu'une seule fois, requiert plus de temps et l'utilisation d'une échelle ou d'une nacelle. De préférence le système de drisse équipe chacun des points d'ancrage recevant une extrémité d'ancrage parmi les extrémités d'ancrage des câbles de suspension.

### BRÈVE DESCRIPTION DES FIGURES

D'autres caractéristiques et avantages de l'invention ressortiront à la lecture de la description qui suit, en référence aux figures annexées, qui illustrent :
[Fig. 1] : une vue en perspective isométrique d'une plateforme mobile selon l'invention
[Fig. 2] : une vue en perspective isométrique d'une partie de la plateforme mobile selon ce mode de réalisation ;
[Fig. 3] : une vue en perspective de dessus de la figure 2 ;
[Fig. 4] : une vue en perspective isométrique et simplifiée selon ce mode de réalisation dans laquelle est illustré un seul des câbles de suspension de la plateforme mobile ;
[Fig. 5] : une vue de côté de la figure 4 ;
[Fig. 6] : une vue de dessus de la figure 4 ;
[Fig. 7] : une vue en perspective d'un détail de la figure 4 ;
[Fig. 8] : une vue en perspective d'un détail de la figure 4.

Pour plus de clarté, les éléments identiques ou similaires sont repérés par des signes de référence identiques sur l'ensemble des figures.

Dans la description et les revendications, pour clarifier la description et les revendications, on adoptera à titre non limitatif la terminologie longitudinal, transversal et vertical en référence au trièdre **X, Y, Z** indiqué aux figures.

### DESCRIPTION DÉTAILLÉE D'UN MODE DE RÉALISATION

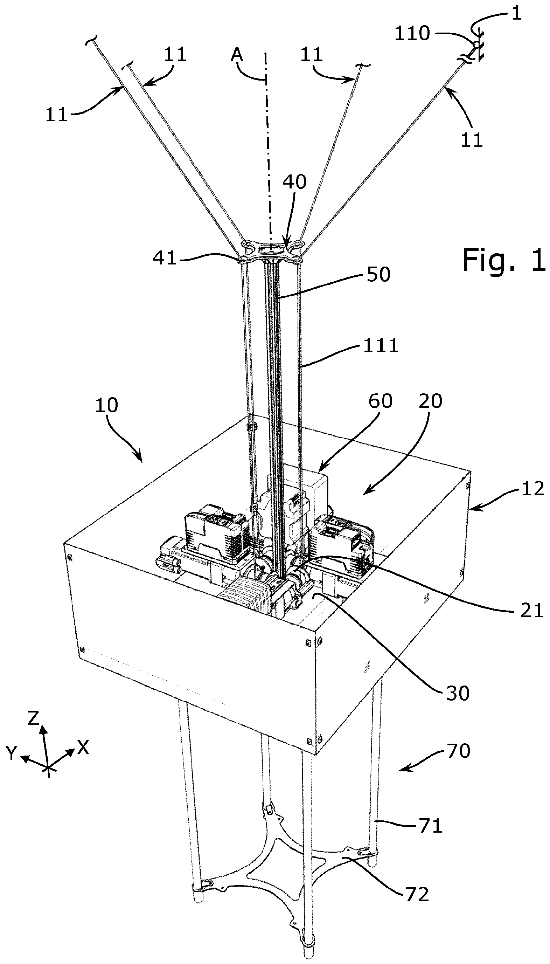

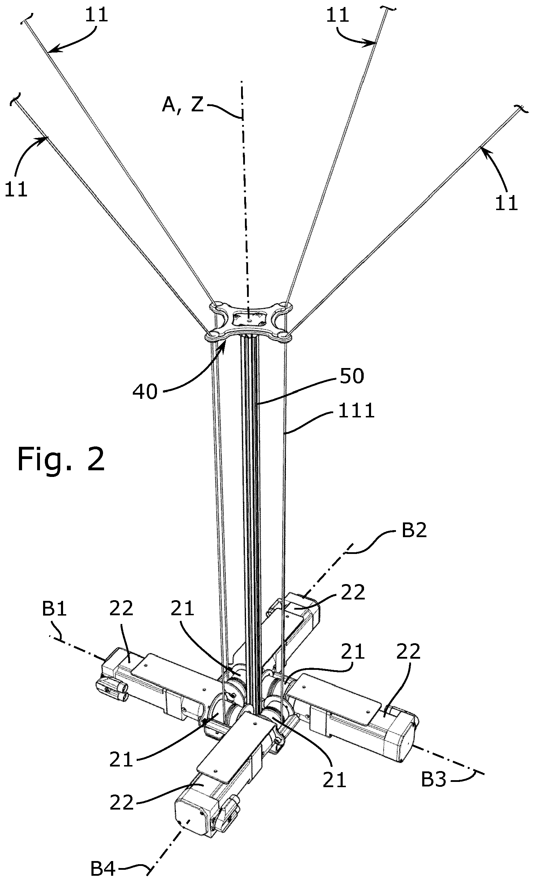

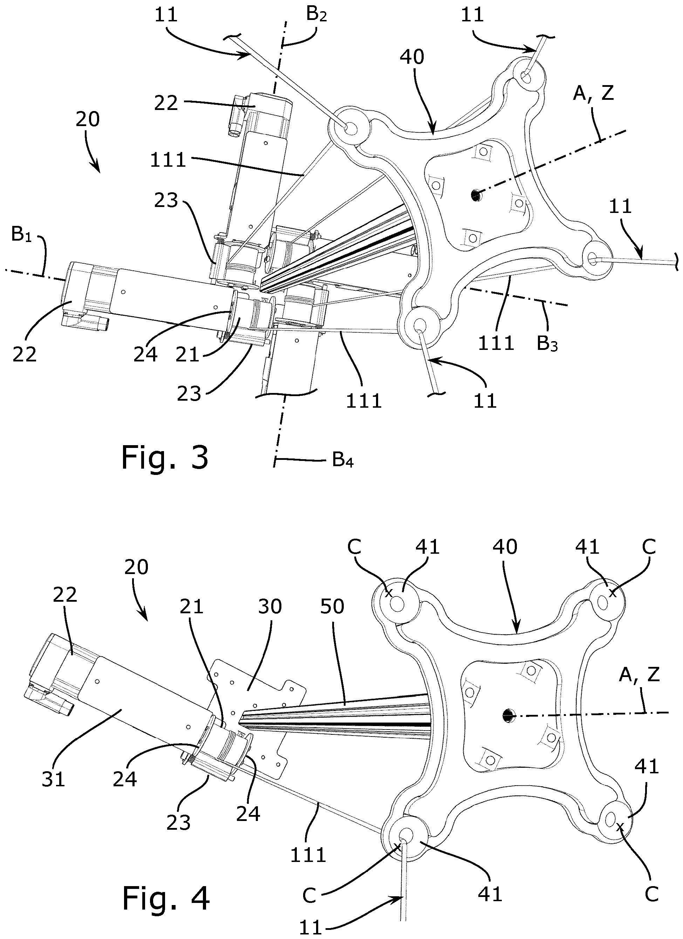

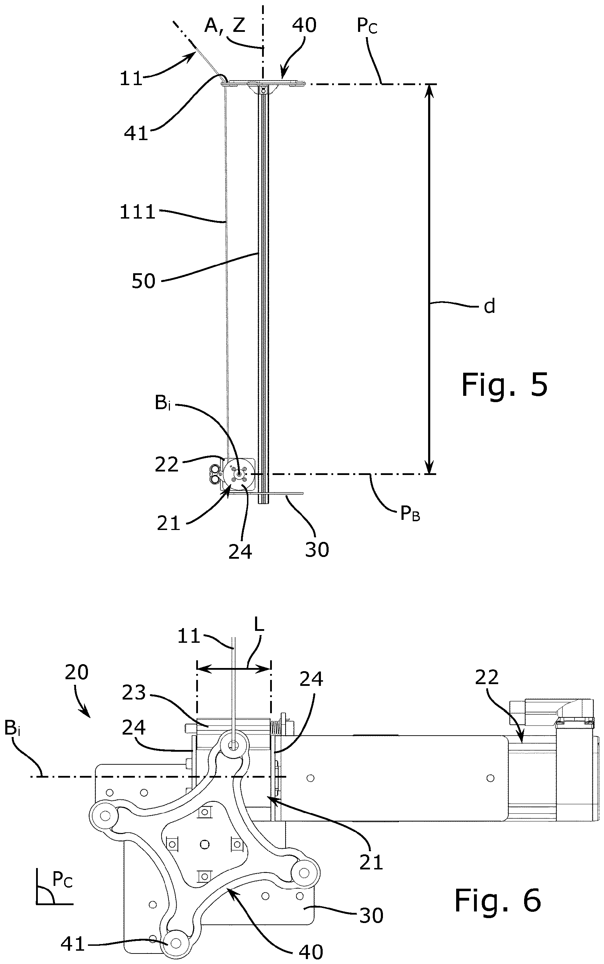

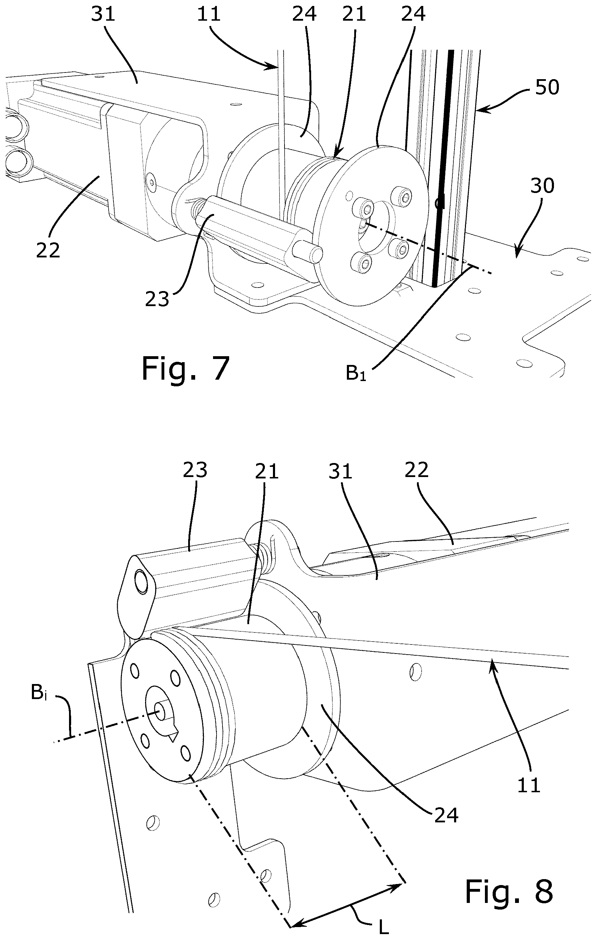

En référence aux figures 1 à 8 est illustrée une plateforme mobile **10** d'un robot parallèle à câbles destinée à être suspendue par des câbles **11** de suspension, dont des extrémités d'ancrage **110** sont fixées à une structure fixe **1** de l'espace.

Dans ce mode de réalisation, la plateforme mobile **10** est configurée pour être suspendue par quatre câbles **11** de suspension. Pour assurer le déplacement de la plateforme mobile dans son espace, ladite plateforme mobile est équipée d'un ensemble moteur **20** supporté sur une structure de support **30** et comportant des tambours **21** d'enroulement motorisés. Chacun des tambours est destiné à être solidarisé à un câble **11** associé parmi les câbles **11** de suspension pour réaliser un enroulement ou un déroulement du câble **11** associé. Chacun des tambours **21** d'enroulement motorisés est associé à un motoréducteur **22** pour entraîner le tambour associé en rotation, dans un sens et dans l'autre. La rotation d'un tambour **21** permet dans un sens direct, d'enrouler le câble **11** associé et, dans un autre de sens indirect, opposé au sens direct, de dérouler le câble **11** associé.

Chacun des motoréducteurs est fixé à la structure de support **30** par une chape de fixation **31** rapportée sur la structure de support **30** et permettant un démontage simple et rapide.

L'ensemble moteur **20** est commandé par un ensemble de commande **60** pour contrôler le déplacement dans l'espace de la plateforme mobile **10.** En particulier, chacun des tambours ou enrouleurs est commandé concomitamment pour assurer son déplacement. Une partie de l'ensemble de commande **60** est embarquée sur la plateforme mobile **10,** de préférence fixée à la structure de support **30** avec l'ensemble moteur **20.** Une autre partie de l'ensemble de commande **60** est située au sol pour former une station de commande par un opérateur. De cette manière, un opérateur peut envoyer des consignes à la plateforme mobile, par exemple des consignes de déplacement. De préférence, l'ensemble de commande **60** embarqué sur la plateforme mobile **10** est configuré pour assurer un déplacement autonome de la plateforme dans son espace utile suivant des paramètres prédéterminés par un opérateur, voire programmé pour commander la plateforme en fonction d'un procédé d'apprentissage automatique (« machine learning »). De manière générale :
- l'ensemble de commande **60** peut être configuré pour asservir le déplacement de la plateforme mobile **10** et les déroulement et enroulement des câbles **11** autour de chacun des tambours **21** associés ; et/ou
- l'ensemble de commande **60** peut recueillir des données en provenance de moyens de détection de manière à les prendre en compte pour effectuer ses tâches de commande ; et/ou
- l'ensemble de commande **60** peut comporter une commande en position, en vitesse ou en couple du robot parallèle à câbles, notamment selon les informations de position de la plateforme mobile **10** dans l'espace par rapport à des informations obtenues à l'aide des moyens de détection ; et/ou
- l'ensemble de commande **60** peut comporter une commande consistant à prendre en compte les mesures effectuées par les moyens de détection au fur et à mesure de la prise de mesures, en dynamique, et de corriger en temps réel la position de la plateforme mobile **10** en fonction de ces mesures.

La plateforme mobile permet d'assurer le transport et le déplacement dans l'espace d'un outil de travail **70,** situé ici verticalement sous la structure de support **30,** et solidaire fixement de cette structure de support **30.** L'outil de travail **70** dans ce mode de réalisation est un système de désinfection par rayonnements ultraviolets. L'outil de travail **70** comprend à cet effet des sources de lumières **71** sous forme de tubes disposés verticalement. Ces sources de lumières **71** sont configurées pour émettre des radiations du spectre ultraviolet présentant un pouvoir bactéricide contribuant à détruire les bactéries et décontaminer ainsi des surfaces qui se situent dans l'espace utile de travail du robot parallèle à câbles. Une structure de liaison **72** pour lier rigidement les sources de lumières **71** entre elles est utilisée pour rigidifier l'outil de travail **70.**

La structure de support **30** comprend également des panneaux latéraux **12** qui lui sont fixés entourant notamment l'ensemble moteur **20.**

La plateforme mobile **10** comprend une plateforme de suspension **40** rigidement solidaire de la structure de support **30** et disposée, suivant un axe de référence **A** de la plateforme mobile **10,** à distance des tambours **21** d'enroulement de l'ensemble moteur **20.** La plateforme de suspension **40** comprend des organes de renvoi **41,** chacun à distance d'un tambour **21** associé parmi les tambours **21** d'enroulement et configuré pour dévier le câble **11** associé au tambour **21** associé, entre le tambour **21** associé et l'extrémité d'ancrage **110** du câble **21** associé, dans une position suspendue de la plateforme mobile **10,** dans laquelle l'axe de référence **A** est vertical **Z** et la plateforme de suspension **40** est située au-dessus des tambours **21** d'enroulement. Dans une telle configuration, chaque câble **11** parcourt un chemin entre son extrémité reliée au tambour **21** associé et son extrémité d'ancrage **110** reliée à la structure fixe **1** qui transite par la plateforme de suspension **40,** dévié par l'organe de renvoi **41** associé. De cette manière, les câbles **11** de la plateforme mobile se situent tous au voisinage de l'axe de référence **A** au niveau de la plateforme de suspension **40.** De préférence, les câbles **11,** au niveau de la plateforme de suspension **40,** c'est-à-dire au niveau de leur déviation au voisinage de l'axe de référence **A,** sont équidistants de l'axe de référence **A** d'une distance supérieure à 10 fois, de préférence supérieure à 20 fois et inférieure à 100 fois, de préférence inférieure à 50 fois, le diamètre moyen des câbles **11,** les diamètres étant identiques ici.

La concentration des câbles **11** au niveau de la plateforme de suspension **40** permet ainsi à la plateforme mobile **10** de se comporter comme si elle était suspendue au niveau de cette plateforme de suspension **40.** La solidarisation de la plateforme de suspension **40** à la structure de support **30** confère une rigidité à la plateforme mobile **10.** Cette solidarisation est effectuée par un mât de suspension **50** s'étendant suivant l'axe vertical de référence **A, Z.** On peut prévoir que le mât de suspension **50** présente une longueur axiale variable suivant l'axe de référence **A** pour permettre un réglage de la distance entre la plateforme de suspension **40** et les tambours **21.** Dans ce cas des moyens de verrouillage de la position axiale du mât seront avantageusement prévus.

Les organes de renvoi **41** de la plateforme de suspension **40** sont répartis circonférentiellement de façon régulière autour de l'axe de référence **A** pour garantir une meilleure stabilité et comprennent ici des oeillets de renvoi. Les oeillets de renvois sont dimensionnés pour être chacun traversés par l'un des câbles, chacun des câbles présentant un diamètre de 2 mm dans ce mode de réalisation. Des variantes de réalisations telles que des poulies ou autres sont possibles. On peut également prévoir de simples orifices dans la plateforme de suspension **40** : on veillera dans ce cas à usiner le contour de l'orifice pour limiter les frottements lors du renvoi d'angle et éviter ainsi toute usure prématurée. Par ailleurs, ces organes de renvoi **41** sont disposés verticalement à un même niveau. Autrement dit, le renvoi d'angle du câble **11** qui lui est associé suit une courbure autour d'un centre de courbure **C.** Les centres de courbure **C** des organes de renvoi **41** sont coplanaires dans un plan de suspension **P_{C}** pour améliorer encore la stabilité. Chaque centre de courbure **C** est orienté vers l'extérieur de la plateforme mobile **20** par rapport au câble associé, de sorte que, dans une position suspendue de la plateforme mobile **10,** la portion de chaque câble **11** est tendue entre la plateforme de suspension **40** et la fixation de leur extrémité d'ancrage **110** à la structure fixe **1,** les câbles **11** tendus s'éloignant de la plateforme mobile vers la structure fixe **1.**

Le plan de suspension **P_{C}** contenant les centres de courbure **C** des organes de renvoi **41** est parallèle à un plan de référence **P_{B}** pour améliorer encore la stabilité.

La structure de support **30** a un premier centre de gravité, la plateforme de suspension **40** a un deuxième centre de gravité, l'axe de référence **A** passant par le premier et deuxième centres de gravité. L'ensemble moteur **20** est également disposé sur la structure de support **30** de sorte que l'axe de référence **A** soit sécant avec son centre de gravité. L'outil de travail **70** également est disposé de sorte que son centre de gravité soit placé sur l'axe de référence **A.**

Ces caractéristiques permettent l'obtention d'un centre de gravité de la plateforme mobile **10** situé sur son axe de référence **A** vertical, présentant l'avantage d'améliorer sa stabilité. En outre, il permet un déplacement plus rapide dans l'espace pour un effort énergétique relativement faible.

Toujours dans un souci de stabilité et d'équilibre des masses, chacun des tambours **21** d'enroulement est guidé en rotation autour d'un axe d'enroulement **B₁, B₂, B₃, B₄,** les axes d'enroulement **B₁, B₂, B₃, B₄** des tambours **21** étant situés dans un même un plan de référence **P_{B},** de préférence perpendiculaire à l'axe de référence **A.** Le plan de référence **P_{B}** est parallèle au plan de suspension **P_{C}** pour améliorer encore la stabilité. Les motorisations associées à chacun des tambours **21,** à savoir les motoréducteurs **22,** sont disposées chacun de sorte à être alignées suivant l'axe d'enroulement **B₁, B₂, B₃, B₄** du tambour **21** d'enroulement auquel il est associé, ces axes d'enroulement étant portés par les arbres moteurs des motoréducteurs associés. Ces axes d'enroulement sont disposés autour de l'axe de référence **A** et sont disposés de sorte à être orientés suivant deux directions d'un repère orthogonal **X, Y** du plan de référence et suivant les quatre sens, chacun dans un sens différent de sorte à respecter une symétrie d'axe, l'axe de référence **A.**

Pour améliorer la stabilité, on cherche à ce que dans une position suspendue, une portion **111** de chaque câble **11** est tendue entre le tambour **21** associé et l'organe de renvoi **41** associé de la plateforme de suspension **40** et sensiblement verticale, pour améliorer la stabilité de la plateforme mobile **10.**

Chacun des tambours **21** présente des flasques **24** délimitant de part et d'autre axialement suivant l'axe d'enroulement **B₁, B₂, B₃, B₄** une portion d'enroulement d'une longueur **L** axiale prédéterminée. On choisit le déport de la plateforme de suspension **40** par rapport aux tambours **21** de sorte, dans la position suspendue, la portion **111** de chaque câble **11** est tendue entre le tambour **21** associé et l'organe de renvoi **41** associé de la plateforme de suspension **40,** avec un angle d'enroulement variable inférieur à 2°. Cette variation est due à l'enroulement du câble évoluant sur la portion d'enroulement du tambour **21** associé entre deux positions extrêmes délimitées par les flasques **24.** Cet angle d'enroulement est mesuré dans un plan de projection orthogonale parallèle à l'axe de référence **A** et à l'axe d'enroulement **Bi** du tambour **21** associé, entre une projection orthogonale de l'axe de référence **A** et une projection orthogonale de la portion **111** de câble **11.**

Comme évoqué, les câbles **11** de la plateforme mobile se situent tous au voisinage de l'axe de référence **A** au niveau de la plateforme de suspension **40.** En particulier ici, les quatre organes de renvoi **41** sur la plateforme de suspension **40** se trouvent sur une plaque contenue dans une forme géométrique circonscrite s'étendant transversalement à l'axe de référence suivant une surface carrée, de dix centimètres de côté. Cette surface délimite une surface d'encombrement des organes de renvoi **41** et des câbles **11** au niveau de la plateforme de suspension **40.** De cette manière, les organes de renvoi **41** de la plateforme de suspension **40** sont répartis sur une surface de 100 centimètres carrés. D'un point de vue du modèle géométrique du robot parallèle à câbles, cela correspond à une plateforme quasi-ponctuelle par rapport à la taille globale de son environnement, les points de tir sur les murs pouvant se trouver à plusieurs dizaines de mètres de distance. Cette plateforme de suspension **40** quasi-ponctuelle permet au robot de se comporter comme une cloche ou un pendule, et d'avoir donc une orientation presque constante dans tout son espace de travail.

Ainsi plus le rapport entre une distance **d** de l'organe de renvoi 41 par rapport au plan de référence **P_{B}** et la longueur d'enroulement **L** du tambour associé est grande, et plus l'angle d'enroulement est faible et permet de tendre vers une portion **111** de câble **11** tendue la plus verticale possible. De préférence, on choisira une distance **d** supérieure d'au moins 15 fois, la longueur **L** axiale pour garantir un tel angle d'enroulement inférieur à deux degrés. Ce rapport de 15 est choisi de sorte à garantir un éloignement suffisant de la plateforme de suspension **40** par rapport à la structure de référence **30** et ainsi garantir une quasi-verticalité des câbles dont l'orientation ne varie pas de plus de deux degrés par rapport à l'axe vertical **Z,** mais pas trop grand pour ne pas trop impacter l'encombrement de la plateforme mobile **10.**

Pour permettre de réduire à son maximum la longueur d'enroulement des tambours **21,** lesdits tambours sont configurés pour assurer un enroulement de leur câble **11** associé sur plusieurs épaisseurs. Un doigt de guidage **23** associé à chacun des tambours d'enroulement motorisés et contraint en compression par un ressort vers le tambour **21** associé permet de guider une portion du câble associé destinée à passer entre le doigt de guidage **23** et le tambour associé et garantir un enroulement homogène du câble **11** associé entre ses deux flasques **24.** Par ailleurs, une surface cylindrique extérieure de chaque tambour **21** est choisie de sorte à être lisse, c'est-à-dire sans gorge de guidage, pour permettre permet également au câble **11** associé de s'enrouler naturellement sur toute la longueur du tambour **21.** Un système à ressort permet de maintenir une pression répartie sur l'enroulement de la portion de câble **11** enroulé et ainsi de bien positionner le câble **11** associé sur le tambour en limitant la formation de surépaisseurs locales dues au mauvais enroulement. En d'autres termes, le doigt de guidage **23** permet d'obtenir un enroulement homogène autour du tambour **21** associé.

L'invention décrite ci-avant est donc particulièrement avantageuse en ce que la plateforme mobile **10** est particulièrement fiable et capable d'utiliser un outil de travail **70** prédéterminé sans contact et partout dans un espace industriel de grandes dimensions. L'ensemble moteur **20** et les câbles sont embarqués sur la plateforme mobile **10,** chaque câble **11** étant stocké enroulé autour du tambour **21** associé. Par ailleurs le comportement dynamique de la plateforme mobile **10** lorsqu'elle est suspendue, compte-tenu de sa configuration, lui permet de progresser relativement rapidement et conserver une stabilité intrinsèque sans nécessiter l'utilisation de câbles supplémentaire. Un tel robot parallèle à câbles est donc très facilement mis en oeuvre, son installation consistant à dérouler en partie au moins les câbles **11** et à les fixer sur la structure fixe **1.** Un tel robot parallèle à câbles facile à installer et désinstaller.

Naturellement, l'invention est décrite dans ce qui précède à titre d'exemple.

Par exemple le nombre de câbles peut varier. On peut prévoir une plateforme mobile équipée de trois câbles de suspension, voire une plateforme mobile équipée de plus de quatre câbles de suspension, par exemple cinq ou six câbles. Un nombre de quatre câbles de suspension, avec leurs les équipements associés (motoréducteur, tambour, organe de renvoi, ...), est un bon compromis entre les la stabilité et la rapidité de déplacement d'une part, et l'encombrement, la transportabilité et la facilité de déploiement sur différents sites industriels.

## Revendications

1. Plateforme mobile (10) destinée à être suspendue par des câbles (11) de suspension ayant une extrémité d'ancrage (110) fixée à une structure fixe (1) dans l'espace, la plateforme mobile (10) comprenant :
- un ensemble moteur (20) comportant des tambours (21) d'enroulement motorisés, chacun destiné à être solidarisé à un câble (11) associé parmi les câbles (11) de suspension pour réaliser un enroulement ou un déroulement du câble (11) associé,
- une structure de support (30) pour supporter l'ensemble moteur,
la plateforme mobile (10) étant **caractérisée en ce qu'**elle comprend une plateforme de suspension (40) rigidement solidaire de la structure de support (30) et disposée, suivant un axe de référence (A) de la plateforme mobile (10), à distance des tambours (21) d'enroulement de l'ensemble moteur (20), la plateforme de suspension (40) comprenant des organes de renvoi (41), chacun à distance d'un tambour (21) associé parmi les tambours (21) d'enroulement et configuré pour dévier le câble (11) associé au tambour (21) associé, entre le tambour (21) associé et l'extrémité d'ancrage (110) du câble (21) associé, dans une position suspendue de la plateforme mobile (10), dans laquelle l'axe de référence (A) est vertical (Z) et la plateforme de suspension (40) est située au-dessus des tambours (21) d'enroulement.

2. Plateforme mobile (10) selon la revendication 1, **caractérisée en ce que** la plateforme de suspension (40) est fixée à la structure de support (30) par un mât de suspension (50) s'étendant suivant l'axe vertical de référence (A, Z).

3. Plateforme mobile (10) selon la revendication 2, **caractérisée en ce que** la structure de support (30) a un premier centre de gravité, la plateforme de suspension (40) a un deuxième centre de gravité, l'axe de référence (A) passant par les premier et deuxième centres de gravité.

4. Plateforme mobile (10) selon l'une quelconque des revendications précédentes, **caractérisée en ce que** chacun des tambours (21) d'enroulement est guidé en rotation autour d'un axe d'enroulement (B₁, B₂, B₃, B₄), les axes d'enroulement (B₁, B₂, B₃, B₄) des tambours (21) étant situés dans un même un plan de référence (P_{B}), de préférence perpendiculaire à l'axe de référence (A).

5. Plateforme mobile (10) selon la revendication 4, **caractérisée en ce que** chacun des organes de renvoi (41) est apte à dévier le câble (11) associé autour d'un centre de courbure (C), les centres de courbure des organes de renvoi (41) étant coplanaires dans un plan de suspension (Pc) parallèle au plan de référence (P_{B}).

6. Plateforme mobile (10) selon l'une quelconque des revendications 4 à 5, **caractérisée en ce que** chacun des tambours (21) présente des flasques (24) délimitant de part et d'autre axialement suivant l'axe d'enroulement (B₁, B₂, B₃, B₄) une portion d'enroulement d'une longueur (L) axiale prédéterminée, l'organe de renvoi (41) associé étant situé à une distance (d) supérieure d'au moins 12 fois, de préférence au moins 15 fois, de préférence encore au moins 20 fois, la longueur (L) axiale prédéterminée.

7. Plateforme mobile (10) selon l'une quelconque des revendications précédentes, **caractérisée en ce qu'**elle comporte des câbles (11) de suspension, chacun des tambours (21) d'enroulement étant solidarisé à un câble (11) associé parmi les câbles (11) de suspension.

8. Plateforme mobile (10) selon la revendication 7, **caractérisée en ce que** la plateforme mobile (10) est configurée de sorte que dans la position suspendue, une portion (111) de chaque câble (11) est tendue entre le tambour (21) associé et l'organe de renvoi (41) associé de la plateforme de suspension (40), avec un angle d'enroulement variable inférieur à 2°, l'angle d'enroulement étant mesuré dans un plan de projection orthogonale parallèle à l'axe de référence (A) et à l'axe d'enroulement (Bi) du tambour (21) associé, entre une projection orthogonale de l'axe de référence (A) et une projection orthogonale de la portion (111) de câble (11).

9. Plateforme mobile (10) selon l'une quelconque des revendications précédentes, **caractérisée en ce que** le nombre de câbles (11) est supérieur ou égal à trois, de préférence inférieur à sept, de préférence encore inférieur à cinq, de préférence encore égal à quatre.

10. Plateforme mobile (10) selon l'une quelconque des revendications précédentes, **caractérisée en ce que** les organes de renvoi (41) de la plateforme de suspension (40) sont répartis circonférentiellement de façon régulière autour de l'axe de référence (A).

11. Plateforme mobile (10) selon l'une quelconque des revendications précédentes, **caractérisée en ce que** les organes de renvoi (41) de la plateforme de suspension (40) sont équidistants de l'axe de référence (A), de préférence à une distance supérieure à 10 fois, de préférence supérieure à 20 fois, et inférieure à 100 fois, de préférence inférieure à 50 fois un diamètre des câbles (11).

12. Plateforme mobile (10) selon l'une quelconque des revendications précédentes, **caractérisée en ce que** les organes de renvoi (41) de la plateforme de suspension (40) comprennent des poulies ou des oeillets de renvoi.

13. Plateforme mobile (10) selon l'une quelconque des revendications précédentes, **caractérisée en ce que** l'ensemble moteur (20) comporte, associé à chacun des tambours (21) d'enroulement motorisés, un motoréducteur (22).

14. Plateforme mobile (10) selon l'une quelconque des revendications précédentes, **caractérisée en ce que** l'ensemble moteur (20) comporte, associé à chacun des tambours (21) d'enroulement motorisés, un doigt de guidage (23) pour guider une portion du câble (11) associé destinée à passer entre le doigt de guidage (23) et le tambour (21) associé.

15. Robot parallèle à câbles, **caractérisé en ce qu'**il comporte une plateforme mobile (10) selon l'une quelconque des revendications précédentes et un ensemble de commande (60) pour commander l'ensemble moteur (20) de la plateforme mobile (10) et contrôler le déplacement de la plateforme mobile (10).

## Patentansprüche

1. Mobile Plattform (10), die dazu bestimmt ist, an Aufhängungsseilen (11) aufgehängt zu werden, deren Verankerungsende (110) an einer festen Struktur (1) im Raum befestigt ist, wobei die mobile Plattform (10) Folgendes umfasst:
- eine Motorbaugruppe (20), die motorbetriebene Aufwickeltrommeln (21) umfasst, die jeweils dazu bestimmt sind, an einem den Aufhängungsseilen (11) zugeordneten Seil (11) befestigt zu werden, um ein Aufwickeln oder ein Abwickeln des zugeordneten Seils (11) durchzuführen,
- eine Stützstruktur (30) zum Stützen der Motorbaugruppe,
wobei die mobile Plattform (10) **dadurch gekennzeichnet ist, dass** sie eine Aufhängungsplattform (40) umfasst, die starr an der Stützstruktur (30) befestigt und entlang einer Bezugsachse (A) der mobilen Plattform (10) im Abstand von den Aufwickeltrommeln (21) der Motorbaugruppe (20) angeordnet ist, wobei die Aufhängungsplattform (40) Rückführelemente (41) umfasst, die sich jeweils in einem Abstand von einer der Trommeln (21) zugeordneten Aufwickeltrommel (21) befinden und so konfiguriert sind, dass sie das Seil (11) umlenken, das der zugeordneten Trommel (21) zugeordnet ist, zwischen der zugeordneten Trommel (21) und dem Verankerungsende (110) des zugeordneten Seils (21) in einer aufgehängten Position der mobilen Plattform (10), in der die Bezugsachse (A) vertikal (Z) ist und die Aufhängeplattform (40) sich über den Aufwickeltrommeln (21) befindet.

2. Mobile Plattform (10) nach Anspruch 1, **dadurch gekennzeichnet, dass** die Aufhängungsplattform (40) durch einen sich entlang der vertikalen Bezugsachse (A, Z) erstreckenden Aufhängungsmast (50) an der Stützstruktur (30) befestigt ist.

3. Mobile Plattform (10) nach Anspruch 2, **dadurch gekennzeichnet, dass** die Stützstruktur (30) einen ersten Schwerpunkt aufweist, die Aufhängungsplattform (40) einen zweiten Schwerpunkt aufweist, wobei die Bezugsachse (A) durch den ersten und zweiten Schwerpunkt verläuft.

4. Mobile Plattform (10) nach einem der vorstehenden Ansprüche, **dadurch gekennzeichnet, dass** jede der Aufwickeltrommeln (21) um eine Wickelachse (B₁, B₂, B₃, B₄) drehend geführt wird, wobei die Wickelachsen (B₁, B₂, B₃, B₄) der Trommeln (21) sich in derselben Bezugsebene (P_{B}) befinden, vorzugsweise senkrecht zur Bezugsachse (A).

5. Mobile Plattform (10) nach Anspruch 4, **dadurch gekennzeichnet, dass** jedes der Rückführelemente (41) geeignet ist, das zugeordnete Seil (11) um einen Krümmungsmittelpunkt (C) umzulenken, wobei die Krümmungsmittelpunkte der Rückführelemente (41) koplanar in einer Aufhängungsebene (Pc) parallel zur Referenzebene (P_{B}) liegen.

6. Mobile Plattform (10) nach einem der Ansprüche 4 bis 5,
**dadurch gekennzeichnet, dass** jede der Trommeln (21) Flansche (24) aufweist, die auf beiden Seiten axial entlang der Wickelachse (B₁, B₂, B₃, B₄) einen Wicklungsabschnitt mit einer vorbestimmten axialen Länge (L) begrenzen, wobei das zugeordnete Rückführelement (41) in einem Abstand (d) angeordnet ist, der größer als mindestens das 12-fache, vorzugsweise mindestens das 15-fache, besonders bevorzugt mindestens das 20-fache der vorbestimmten axialen Länge (L) ist.

7. Mobile Plattform (10) nach einem der vorstehenden Ansprüche, **dadurch gekennzeichnet, dass** sie Aufhängungsseile (11) aufweist, wobei jede der Aufwickeltrommeln (21) an einem den Aufhängungsseilen (11) zugehöriges Seil (11) befestigt ist.

8. Mobile Plattform (10) nach Anspruch 7, **dadurch gekennzeichnet, dass** die mobile Plattform (10) so konfiguriert ist, dass in der aufgehängten Position ein Abschnitt (111) jedes Seils (11) zwischen der zugehörigen Trommel (21) und dem der Aufhängungsplattform (40) zugeordneten Rückführelement (41) gespannt ist, mit einem variablen Wickelwinkel kleiner als 2°, wobei der Wickelwinkel in einer orthogonalen Projektionsebene parallel zur Bezugsachse (A) und zur Wickelachse (Bi) der zugehörigen Trommel (21) gemessen wird, zwischen einer orthogonalen Projektion der Bezugsachse (A) und einer orthogonalen Projektion des Abschnitts (111) des Seils (11).

9. Mobile Plattform (10) nach einem der vorstehenden Ansprüche, **dadurch gekennzeichnet, dass** die Anzahl der Seile (11) größer oder gleich drei, bevorzugt kleiner als sieben, noch bevorzugter kleiner als fünf, noch bevorzugter gleich vier ist.

10. Mobile Plattform (10) nach einem der vorstehenden Ansprüche,
**dadurch gekennzeichnet, dass** die Rückführelemente (41) der Aufhängungsplattform (40) regelmäßig um die Bezugsachse (A) in Umfangsrichtung verteilt sind.

11. Mobile Plattform (10) nach einem der vorstehenden Ansprüche,
**dadurch gekennzeichnet, dass** die Rückführelemente (41) der Aufhängungsplattform (40) von der Bezugsachse (A) gleich weit entfernt sind, vorzugsweise in einem Abstand von mehr als das 10-fache, vorzugsweise mehr als das 20-fache und weniger als das 100-fache, vorzugsweise weniger als das 50-fache des Durchmessers der Seile (11).

12. Mobile Plattform (10) nach einem der vorstehenden Ansprüche,
**dadurch gekennzeichnet, dass** die Rückführelemente (41) der Aufhängungsplattform (40) Umlenkrollen oder Rückstellösen umfassen.

13. Mobile Plattform (10) nach einem der vorstehenden Ansprüche,
**dadurch gekennzeichnet, dass** die Motorbaugruppe (20) einen Getriebemotor (22) aufweist, der jeder der motorbetriebenen Aufwickeltrommeln (21) zugeordnet ist.

14. Mobile Plattform (10) nach einem der vorstehenden Ansprüche,
**dadurch gekennzeichnet, dass** die Motorbaugruppe (20) einen Führungsfinger (23) aufweist, der jeder der motorbetriebenen Aufwickeltrommeln (21) zugeordnet ist, zum Führen eines Abschnitts des zugehörigen Seils (11), das dazu bestimmt ist, zwischen dem Führungsfinger (23) und der zugeordnet Trommel (21) hindurchzugehen.

15. Paralleler Seilroboter, **dadurch gekennzeichnet, dass** er eine mobile Plattform (10) nach einem der vorstehenden Ansprüche und eine Steuerbaugruppe (60) zur Steuerung der Motorbaugruppe (20) der mobilen Plattform (10) und zur Steuerung der Bewegung der mobilen Plattform (10) umfasst.

## Claims

1. Mobile platform (10) intended to be suspended by suspension cables (11) having an anchoring end (110) attached to a spatially fixed structure (1), the mobile platform (10) comprising:
- a motor assembly (20) having motorized winding drums (21), each being intended to be secured to an associated cable (11) from among the suspension cables (11) in order to wind up or unwind the associated cable (11),
- a support structure (30) for supporting the motor assembly,
the mobile platform (10) being **characterized in that** it comprises a suspension platform (40) rigidly secured to the support structure (30) and arranged, along a reference axis (A) of the mobile platform (10), at a distance from the winding drums (21) of the motor assembly (20), the suspension platform (40) comprising deflection members (41), each being at a distance from an associated drum (21) from among the winding drums (21) and being configured to deflect the cable (11) associated with the associated drum (21), between the associated drum (21) and the anchoring end (110) of the associated cable (21), into a suspended position of the mobile platform (10), wherein the reference axis (A) is vertical (Z) and the suspension platform (40) is located above the winding drums (21).

2. Mobile platform (10) according to claim 1, **characterized in that** the suspension platform (40) is attached to the support structure (30) by a suspension mast (50) which extends along the vertical reference axis (A, Z).

3. Mobile platform (10) according to claim 2, **characterized in that** the support structure (30) has a first center of gravity, the suspension platform (40) has a second center of gravity, the reference axis (A) passing through the first and second centers of gravity.

4. Mobile platform (10) according to any of the preceding claims, **characterized in that** each of the winding drums (21) is guided in rotation about a winding axis (B₁, B₂, B₃, B₄), the winding axes (B₁, B₂, B₃, B₄) of the drums (21) being located in the same reference plane (P_{B}), preferably perpendicularly to the reference axis (A).

5. Mobile platform (10) according to claim 4, **characterized in that** each of the deflection members (41) is capable of deflecting the associated cable (11) around a center of curvature (C), the centers of curvature of the deflection members (41) being coplanar in a suspension plane (Pc) parallel to the reference plane (P_{B}).

6. Mobile platform (10) according to any of claims 4 to 5,
**characterized in that** each of the drums (21) has flanges (24) which delimit on either side, axially along the winding axis (B₁, B₂, B₃, B₄), a winding portion of a predetermined axial length (L), the associated deflection member (41) being located at a distance (d) greater than at least 12 times, preferably at least 15 times, more preferably at least 20 times, the predetermined axial length (L).

7. Mobile platform (10) according to any of the preceding claims,
**characterized in that** it has suspension cables (11), each of the winding drums (21) being secured to an associated cable (11) from among the suspension cables (11).

8. Mobile platform (10) according to claim 7, **characterized in that** the mobile platform (10) is configured such that, in the suspended position, a portion (111) of each cable (11) is tensioned between the associated drum (21) and the associated deflection member (41) of the suspension platform (40), at a variable winding angle of less than 2°, the winding angle being measured in a plane of orthogonal projection parallel to the reference axis (A) and to the winding axis (Bi) of the associated drum (21), between an orthogonal projection of the reference axis (A) and an orthogonal projection of the portion (111) of cable (11).

9. Mobile platform (10) according to any of the preceding claims,
**characterized in that** the number of cables (11) is greater than or equal to three, preferably less than seven, more preferably less than five, even more preferably equal to four.

10. Mobile platform (10) according to any of the preceding claims,
**characterized in that** the deflection members (41) of the suspension platform (40) are evenly distributed circumferentially around the reference axis (A).

11. Mobile platform (10) according to any of the preceding claims,
**characterized in that** the deflection members (41) of the suspension platform (40) are equidistant from the reference axis (A), preferably at a distance greater than 10 times, more preferably greater than 20 times, and less than 100 times, preferably less than 50 times, the diameter of the cables (11).

12. Mobile platform (10) according to any of the preceding claims,
**characterized in that** the deflection members (41) of the suspension platform (40) comprise pulleys or deflection eyelets.

13. Mobile platform (10) according to any of the preceding claims,
**characterized in that** the motor assembly (20) has, associated with each of the motorized winding drums (21), a geared motor (22).

14. Mobile platform (10) according to any of the preceding claims,
**characterized in that** the motor assembly (20) has, associated with each of the motorized winding drums (21), a guide finger (23) for guiding a portion of the associated cable (11) intended to pass between the guide finger (23) and the associated drum (21).

15. Cable-driven parallel robot, **characterized in that** it has a mobile platform (10) according to any of the preceding claims and a control assembly (60) for controlling the motor assembly (20) of the mobile platform (10) and controlling the movement of the mobile platform (10).
